# EUROPÄISCHE PATENTSCHRIFT

(11) **EP 1 560 724 B1**
(45) Veröffentlichungstag und Bekanntmachung des Hinweises auf die Patenterteilung: **26.08.2009**
(21) Anmeldenummer: 03775216.9
(22) Anmeldetag: 22.10.2003
(51) Int. Cl.: B60H 1/00, B62D 25/14

(54) **QUERTRÄGER IN HYBRIDBAUWEISE**
CROSS MEMBER HAVING A HYBRID STRUCTURE
ENTRETOISE TRANSVERSALE DE CONSTRUCTION HYBRIDE

(30) Priorität: 05.11.2002 DE 10251761
(43) Veröffentlichungstag der Anmeldung: 10.08.2005
(73) Patentinhaber: Behr GmbH & Co. KG, 70469 Stuttgart (DE)
(72) Erfinder: WOLF, Walter, 71570 Oppenweiler-Zell (DE)
(86) Internationale Anmeldenummer: PCT/EP2003/011693
(87) Internationale Veröffentlichungsnummer: WO 2004/041565

(56) Entgegenhaltungen:
- EP-B- 0 662 901
- WO-A-01/68391
- DE-A- 19 953 497
- US-B1- 6 273 495
- PATENT ABSTRACTS OF JAPAN vol. 2000, no. 07, 29. September 2000 (2000-09-29) & JP 2000 108637 A (NIPPON PLAST CO LTD;NISSAN MOTOR CO LTD), 18. April 2000 (2000-04-18)

## Beschreibung

Die Erfindung betrifft einen Querträger in Hybridbauweise für ein Fahrzeug, insbesondere zum Anordnen zwischen A-Säulen eines Fahrzeuges, umfassend einen Grundkörper, der mit einer Verstärkung versehen und in welchen wenigstens ein Luftführungskanal angeordnet ist und der des Weiteren zumindest teilweise aufgeweitet und als Teil eines Gehäuses einer Heizungs-und/oder Klimaanlage gestaltet ist.

Ein derartiger Querträger in Hybridbauweise ist beispielsweise aus der DE 100 14 606 A1 bekannt. Zur Einbindung zusätzlicher Funktionen ist dabei der Querträger zumindest teilweise, insbesondere im mittleren Bereich wenigstens einseitig aufgeweitet und als Teil eines Gehäuses einer Heizungs-und/oder Klimaanlage gestaltet. Hierdurch ist neben einem großen Bauraum auch eine komplexe Geometrie des Querträgers, insbesondere eines Querträgers mit integriertem Luftführungskanal gegeben. Durch die Aufweitung kommt es dabei zu einem gekrümmten Verlauf des Querträgers, bei welchem im allgemeinen nachträglich ein Deckel sowie ein separater Luftführungskanal erforderlich ist. Darüber hinaus weist die Heizungs- und/oder Klimaanlage zusätzlich eine verzweigte Luftverteilungsvorrichtung und somit ein hohes Gewicht auf, da die Strömungs- oder Luftverteilungskanäle üblicherweise aus gespritzten harten formstabilen Schalen oder Blasformteilen gebildet sind. Die Herstellung derartig starrer Strömungskanäle ist aufgrund komplexer Geometrien besonders aufwendig und kostenintensiv.

Aus der EP 662 901 B1 als nächster Stand der Technik ist ein Armaturenbrett für ein Kraftfahrzeug mit einem Querträger bekannt, wobei der kastenartige Querträger im mittleren Bereich einen Ausschnitt zur Aufnahme eines Heiz- oder Klimagerätes aufweist.

Der Erfindung liegt daher die Aufgabe zugrunde, einen Querträger in Hybridbauweise für ein Fahrzeug anzugeben, welcher ein besonders geringes Bauvolumen aufweist.

Die Aufgabe wird erfindungsgemäß gelöst durch einen Querträger in Hybridbauweise für ein Fahrzeug, umfassend einen Grundkörper, der mit einer Verstärkung versehen und in welchen wenigstens ein Luftführungskanal angeordnet ist und der des Weiteren zumindest teilweise aufgeweitet und als Teil eines Gehäuses einer Heizungs- und/oder Klimaanlage gestaltet ist, wobei der Luftführungskanal des Grundkörpers mit einem Luftabgang der Heizungs- und/oder Klimaanlage verbunden ist.

Die Erfindung geht dabei von der Überlegung aus, dass ein Querträger zur Integration von Funktionselemente, insbesondere als Tragelement für eine Heizungs- und/oder Klimaanlage derart vereinfacht werden soll, dass dieser neben der Funktion des Tragelements auch eine direkte Luftzuführung zu Luftauslässen unter Vermeidung eines komplexen verzweigten Kanalsystems ermöglicht. Dabei sollte neben der Vereinfachung der Kanalführung auch das Gewicht deutlich reduziert werden und eine derartige strömungsgünstige Kanalführung ermöglicht sein, dass eine Wirbelbildung des den Strömungskanal durchströmenden Fluids sicher vermieden sind. Hierzu wird der als Tragelement für eine Heizungs- und/oder Klimaanlage dienender Querträger zum einen mit einem Luftführungskanal versehen, der an geeigneten Stellen über Öffnungen verfügt, über die das Fluid, insbesondere Luft austreten kann. Zum anderen ist der im Querträger integrierte Luftführungskanal mit einem Luftabgang der Heizungs- und/oder Klimaanlage verbunden. Hierdurch ist die Anzahl von Abgängen aus einer Heizungs- und/oder Klimaanlage deutlich reduziert. Ein im Querträger integrierter Luftführungskanal mit mehreren variablen eingefügten Austrittsöffnungen und dessen Anbindung an den Luftabgang der Heizungs- und/oder Klimaanlage ermöglicht eine besonders einfache und standardisierbare Luftverteilungsvorrichtung, welche einen besonders kleinen Bauraum benötigt. Bedingt durch den einfachen Aufbau und der besonders variablen Einstellung der Austrittsöffnungen kann eine daraus resultierende Luftverteilungsvorrichtung individuell auf Wunsch eingestellt und ausgebildet werden, wodurch ein besonders hoher thermischer Komfort ermöglicht ist.

Für eine möglichst individuelle Anordnung des Querträgers und dessen Verlauf ist der Grundkörper als um die Heizung- und/oder Klimaanlage umlaufend ausgebildet. Dazu ist der Grundkörper zumindest teilweise in einem Bereich derart aufgeweitet, dass dieser die Heizungs- und/oder Klimaanlage oben, unten, vorne und/oder hinten umläuft. Für eine derartig hohe Designfreiheit im Trägerverlauf umfasst der Grundkörper mindestens zwei Teilstränge, die über einen eine Aufweitung bildenden dritten Teilstrang verbunden sind. Mit anderen Worten: Der Grundkörper ist zweckmäßigerweise in mehrere Teilstränge gegliedert, wobei mindestens zwei gerade und gleichmäßig und ein anderer zumindest partiell gekrümmt verlaufen.

Für eine möglichst platz- und bauraumsparende Anordnung der Heizungs-und/oder Klimaanlage ist diese zweckmäßigerweise im Bereich des dritten Teilstranges an dessen Außenseite angeordnet, wobei die zwei Teilstränge seitlich der Heizungs- und/oder Klimaanlage in Form von Seitenarmen ausgerichtet sind. Dabei verlaufen die Seitenarme weitgehend gerade und gleichmäßig, wohingegen der dritte Teilstrang zur Aufnahme der Heizungs-und/oder Klimaanlage gekrümmt verläuft.

Für eine möglichst einfache Luftzuführung und besonders hohe Strömungsaufnahme und unter Vermeidung von Verwirbelungen mündet der Luftabgang der Heizungs- und/oder Klimaanlage in den Luftführungskanal eines der einen Seitenarm bildenden Teilstränge. Alternativ oder zusätzlich mündet der Luftabgang in den im aufgeweiteten Bereich des Grundkörpers, d.h. im dritten Teilstrang, angeordneten Luftführungskanal und/oder durchläuft oder kreuzt diesen. In einer weiteren alternativen Ausführungsform ist der Grundkörper zumindest teilweise aus zwei parallel zueinander angeordneten Kanälen gebildet ist. Hierbei ist zweckmäßigerweise der Luftführungskanal zumindest teilweise zwischen den parallel zueinander angeordneten Kanälen geführt.

Je nach Art und Ausbildung ist der Luftführungskanal vorzugsweise in den Grundkörper eingeformt ist. Alternativ oder zusätzlich kann der Luftführungskanal durch ein separates Formteil gebildet sein. Für eine bauformunabhängige Anbindung des Luftführungskanals mit dem Luftabgang ist zweckmäßigerweise ein Adapterelement vorgesehen ist. Für eine möglichst variable Ausbildung und Gestaltung des Adapterelements ist diese vorteilhafterweise aus Kunststoff gebildet.

Die mit der Erfindung erzielten Vorteile bestehen insbesondere darin, dass ein als Tragelement für eine Heizungs- und/oder Klimaanlage dienender Querträger mit einem integrierten und an einen Luftabgang der Heizungs-und/oder Klimaanlage angebundenen Luftführungskanal eine große Gestaltungs- und Designfreiheit im Trägerverlauf ermöglicht. Darüber hinaus weist ein derartig multifunktionaler Querträger ein besonders geringes Bauvolumen auf und ermöglicht aufgrund des eine zusätzliche Aussteifungsfunktion bewirkenden Luftführungskanals weitere Integrationen von Haltern auf dem Querträger. Des Weiteren weist der Querträger eine besonders leichte Struktur bei gleichzeitig guter Crashabsorption und möglichst guter Schwingungsdämpfung auf.

Ausführungsbeispiele der Erfindung werden anhand einer Zeichnung näher erläutert. Darin zeigen:
- Fig. 1: schematisch einen Grundkörper für einen Querträger,
- Fig. 2: schematisch einen Hybridträger gemäß Figur 1,
- Fig. 3: schematisch in perspektivischer Darstellung einen Querträger mit einer integrierten Heizungs- und/oder Klimaanlage,
- Fig. 4: schematisch in perspektivischer Darstellung einen Querträger mit einer an einen Luftführungskanal des Querträgers über einen Luftabgang angebundenen Heizungs- und/oder Klimaanlage,
- Fig. 5: schematisch in perspektivischer Darstellung den Querträger ge- mäß Figur 3,
- Fig. 6A bis 6C: schematisch eine alternative Ausführungsform für einen Querträger mit integriertem Luftführungskanal und daran ange- bundener Heizungs- und/oder Klimaanlage, und
- Fig. 7A bis 7E: schematisch eine alternative Ausführungsform für einen Quer- träger mit parallel zueinander angeordneten Kanälen und einem dazwischen angeordneten Luftführungskanal und eine an diesen angebundene Heizungs- und/oder Klimaanlage.

Einander entsprechende Teile sind in allen Figuren mit den gleichen Bezugszeichen versehen.

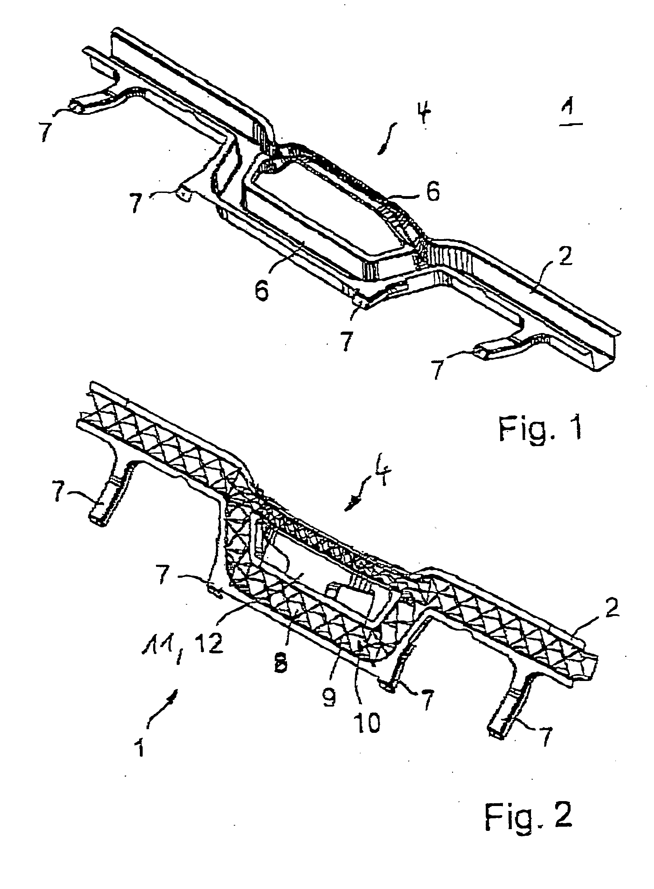

Die Figuren 1 und 2 zeigen Querträger 1 in Hybridbauweise für ein Fahrzeug, welcher zur Anbindung von Funktionselementen, wie z.B. Instrumententafel oder Airbags, zwischen den A-Säulen des Fahrzeugs angeordnet ist. Der Querträger 1 weist einen Grundkörper 2 auf, der aus einem Blechbiegeteil gebildet ist. Der Grundkörper 2 weist ein im wesentlichen u-förmiges, leicht geöffnetes Profil auf, wobei die beiden offenen Schenkelenden nach außen gebogen sind. Der Grundkörper 2 ist im mittleren Bereich 4 aufgeweitet, d.h. im in ein Fahrzeug eingebauten Zustand im Bereich der Mittelkonsole ist der Grundkörper 2 in zwei Teilstränge 6 geteilt, wobei jeder Teilstrang 6 ebenfalls ein entsprechendes, im wesentlichen u-förmiges, leicht geöffnetes Profil aufweist. Alternativ kann der Grundkörper 2 auch als ein Hohlprofil mit beliebigem Querschnitt ausgebildet sein. Zur Anbindung von Funktionselementen, wie z.B. Airbags, Knieaufprallschutz und/oder zur Befestigung einer Instrumententafel sind am Grundkörper 2 mehrere Anbindungen 7 vorgesehen. Je nach Art und Ausbildung sind die Anbindungen 7 als Blechbiegeteile ausgeführt, die formschlüssig auf den Grundkörper 2 angeordnet und mittels einer Schweißverbindung fest verbunden sind. Die Verbindung kann jedoch auch durch ein anderes Fügeverfahren erfolgen. Auch kann die Anbindung 7 in Hybridbauweise, d.h. als ein angespritztes Teil aus einem Kunststoff gebildet sein.

Zur Erhöhung der Stabilität des Grundkörpers 2 ist, wie in Figur 2 dargestellt, im wesentlichen im Inneren des insbesondere u-förmigen Profils eine Verstärkung 8, auch Profilkern genannt, aus Kunststoff vorgesehen, insbesondere eingefügt, welche eine aus Rippen 9 gebildete Wabenstruktur 10 aufweist. Die Wabenstruktur 10 ist hierbei derart ausgebildet, dass die Rippen 9 jeweils im Winkel von ca. 45° zu den Seitenwänden des u-förmigen Profils des Grundkörpers 2 angeordnet sind und sich zwei Rippen 9 im Randbereich treffen. Zur Erhöhung der Stabilität kann der Kunststoff mit Glasfasern versetzt sein. Je nach Art und Ausbildung kann eine derartige aussteifende Verrippung auch in den Anbindungen 7 vorgesehen sein und somit eine Erhöhung der Steifigkeit bewirken.

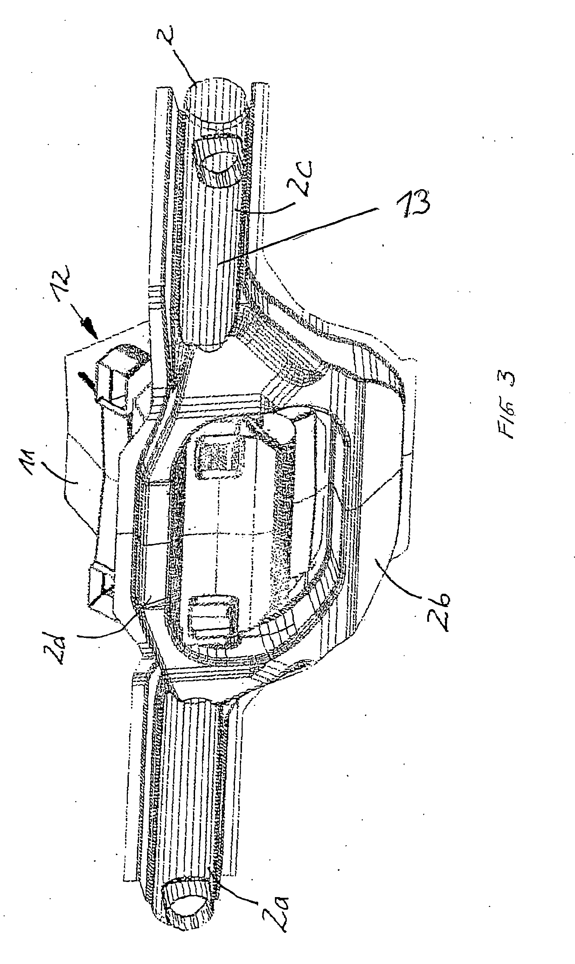

Die Figur 3 zeigt ein Beispiel für eine Anbindung eines Gehäuse 11 einer Heizungs- und/oder Klimaanlage 12 an den Grundkörper 2. Im allgemeinen ist das Gehäuse 11 aus Kunststoff gebildet und am Grundkörper 2 angespritzt oder befestigt. Wie in der Figur 3 dargestellt, umläuft der Grundkörper 2 zumindest teilweise die Heizungs- und/oder Klimaanlage 12. Je nach Anordnung der Heizungs- und/oder Klimaanlage 12 im aufgeweiteten Bereich 4, insbesondere im mittleren Bereich des Querträgers 1, kann der Grundkörper 2 vorne, hinten, oberhalb und/oder unterhalb der Heizungs- und/oder Klimaanlage 12 verlaufen. Dazu ist der Grundkörper 2 in mehrere Teilstränge 2a bis 2d unterteilt, von denen die Teilstränge 2a, 2c Seitenarme des Querträgers 1_bilden, die über den die Aufweitung bildenden und somit partiell gekrümmten Teilstrang 2b miteinander verbunden sind. Je nach Ausbildung des Grundkörpers 2 kann dieser einteilig oder mehrteilig ausgebildet sein. Vom Gehäuse 11 der Heizungs- und/oder Klimaanlage 12 zweigen Strömungskanäle 13 ab.

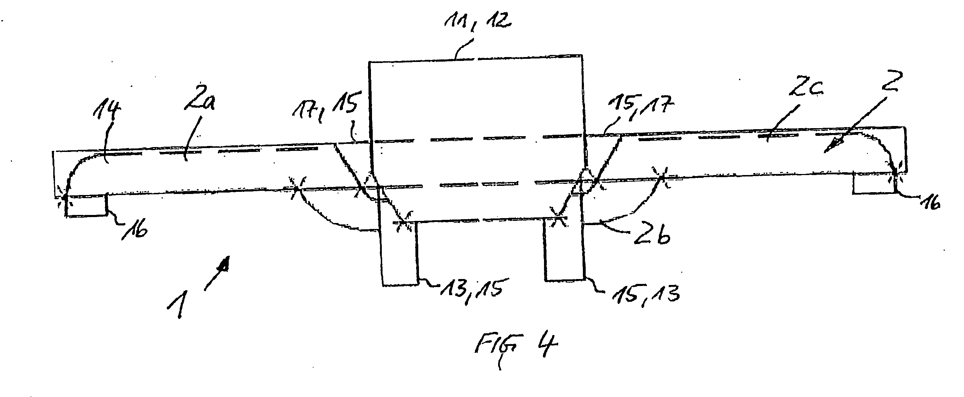

Für einen besonders einfachen und platzsparenden Aufbau des als Tragelement für die Heizungs- und/oder Klimaanlage 12 dienenden Grundkörpers 2 ist in diesem ein Luftführungskanal 14 integriert, wie in Figur 4 dargestellt. Der Luftführungskanal 14 dient dabei zusätzlich der Aussteifung des Grundkörpers 2 und ist bevorzugt aus Kunststoff gebildet. Je nach Art und Ausbildung des Querträgers 1 kann der Luftführungskanal 14 als Kunststoffelement eingespritzt oder als ein separates Formteil im Grundkörper 2 eingefügt sein.

Zusätzlich oder alternativ zu den Strömungskanälen 13 (Figur 3) weist die Heizungs- und/oder Klimaanlage 12 mindestens einen Luftabgang 15 auf. Der Luftabgang 15 ist dabei mit dem im Teilstrang 2a integrierten Luftführungskanal 14 zur seitlichen Belüftung des Fahrzeuginnenraumes über im Grundkörper 2 eingefügte Auslässe 16 verbunden. Zur Belüftung des Frontbereiches ist zum einen ein weiterer in den im Teilstrang 2b integrierten Luftführungskanal 14 mündender und diesen durchlaufender Luftabgang 15 vorgesehen. Zum anderen ist ein weiterer direkt den Frontbereich belüftender Strömungskanal 13 der Heizungs- und/oder Klimaanlage 12 vorgesehen, der den Grundkörper 2, insbesondere dessen Teilstrang 2b oberhalb oder unterhalb kreuzt. Je nach Art und Aufbau des Luftabgangs 15 bzw. des Luftführungskanals 14 kann zur Verbindung dieser Komponenten ein Adapterelement 17 vorgesehen sein. In einer bevorzugten Ausführungsform weist das Adapterelement 17 in nicht näher dargestellter Art und Weise ein Sperrelement, z.B. eine Klappe, zur Steuerung des Luftstroms auf. Das Adapterelement 17 ist bevorzugt aus Kunststoff und kann somit entsprechend des Querschnitts des anzubindenden Luftabgangs 15 bzw. des Luftführungskanals 14 geformt sein. Vorzugsweise ist, das Adoptenelement 17 an den Querträger 1 insbesondere am Grundkörper 2, und/oder die Klimaanlage 12 (kurz HVAC genannt) angeformt.

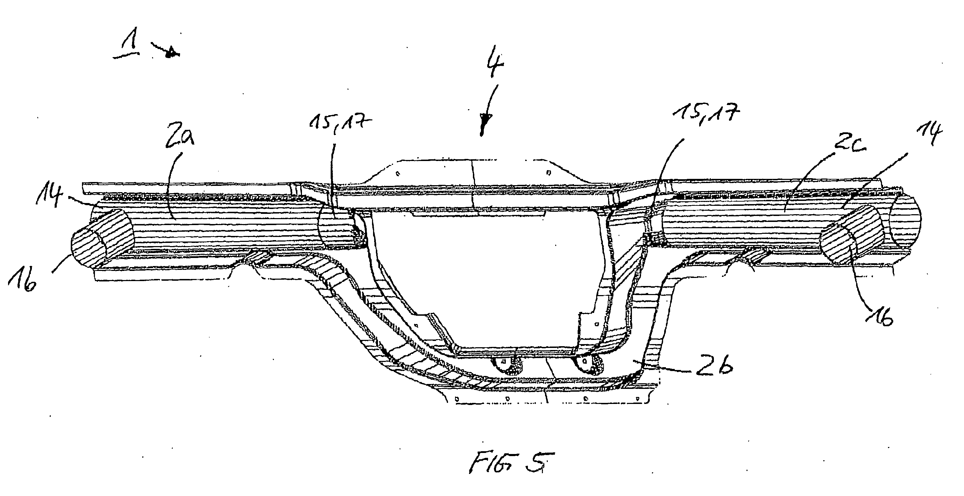

In Figur 5 ist eine Ausführungsform des Querträger 1 in Perspektive dargestellt. Dabei ist beispielhaft für die Fahrerseite oder linke Seite des Querträgers 1, d.h. für den Teilstrang 2a eine Luftzuführung in den darin integrierten Luftführungskanal 14, dargestellt. Dazu ist der Luftführungskanal 14 durch die Seitenwand des Grundkörpers 2 am Ende des als Seitenarm ausgeführten Teilstrangs 2a geführt. Die Heizungs- und/oder Klimaanlage 12 wird dann wie in der Figur 4 gezeigt, von hinten in den aufgeweiteten Bereich 4 an den Grundkörper 2 angebunden, wobei ein zugehöriger seitlicher Luftabgang 15 dann in den Luftführungskanal 14 des Teilstrangs 2a mündet.

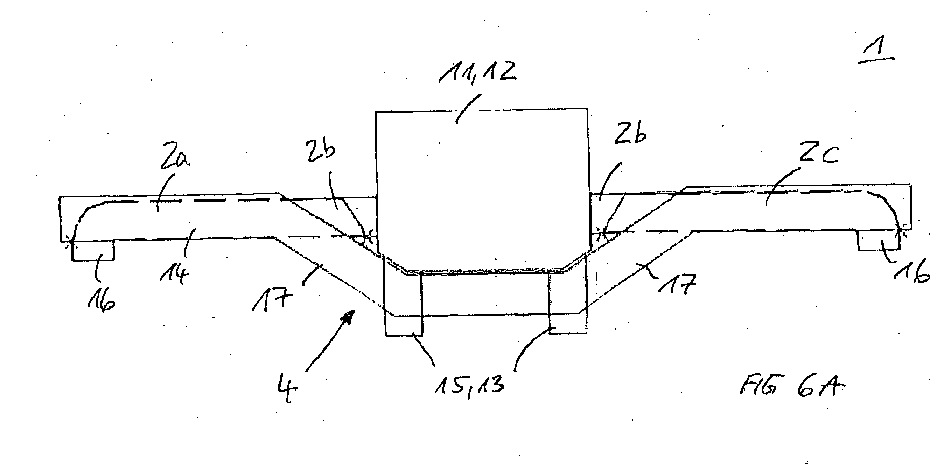

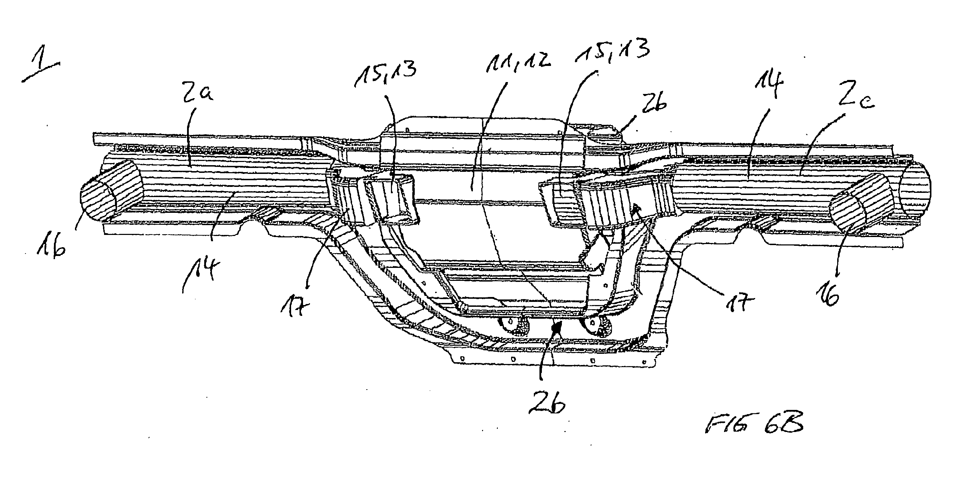

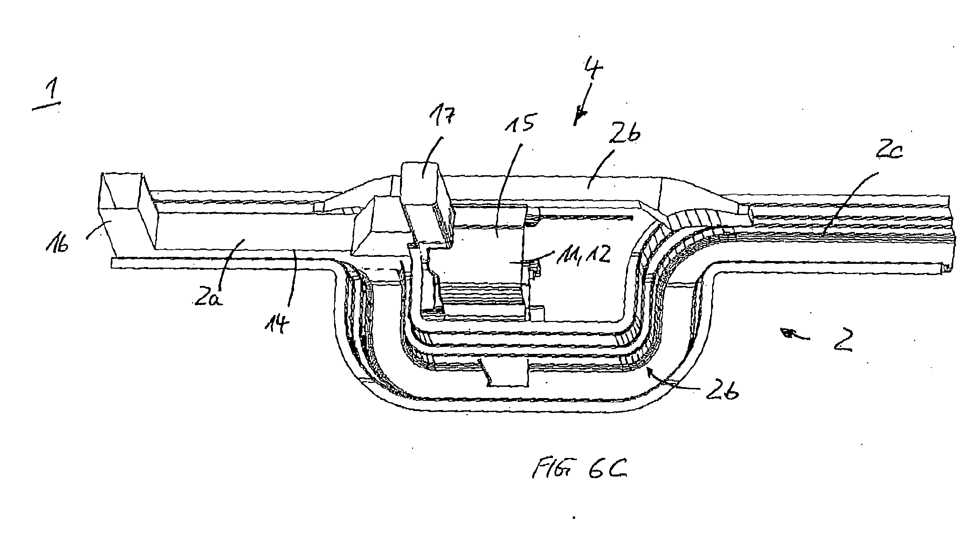

Die Figuren 6A bis 6C zeigen eine alternative Ausführungsform für den Querträger 1 mit einer von hinten an den Grundkörper 2 angebundenen Heizungs- und/oder Klimaanlage 12, wobei diese im mittleren Bereich 4 zwischen zwei parallel zueinander angeordneten Teilsträngen 2b oder Arme des Grundkörpers 2 angeordnet ist und diese durchläuft. Die Verbindung des Luftabgangs 15 der Heizungs- und/oder Klimaanlage 12 zu dem im Grundköper 2 integrierten Luftführungskanal 14 ist mittels des Adapterelements 17 ausgeführt. Hierbei kann das Adapterelement 17 in besonders einfacher Art und Weise von außen aufgesteckt sein. Figur 6C zeigt einen derartigen Grundkörper 2 in perspektivischer Darstellung.

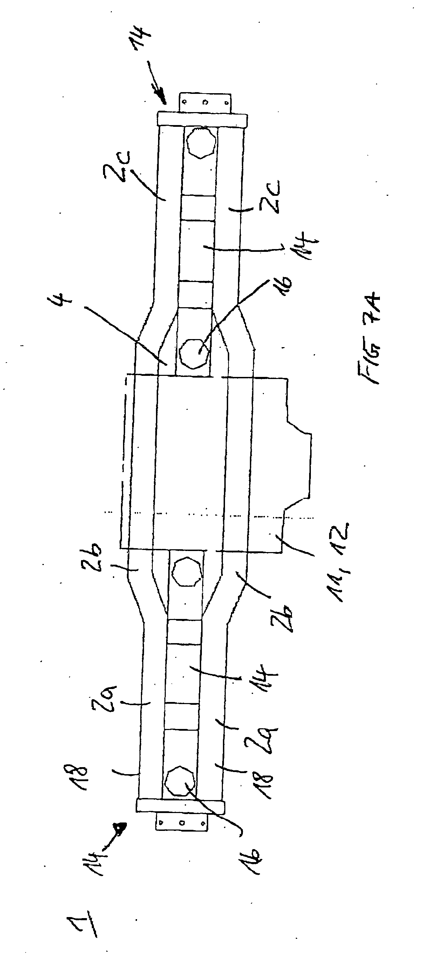

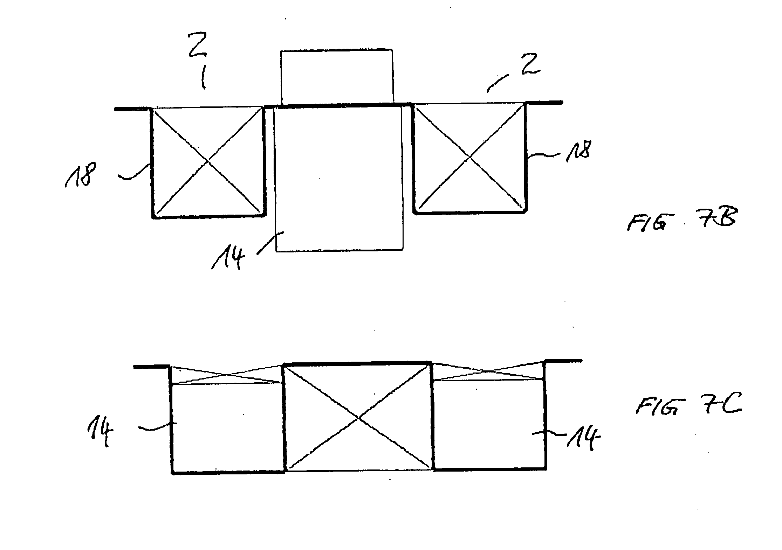

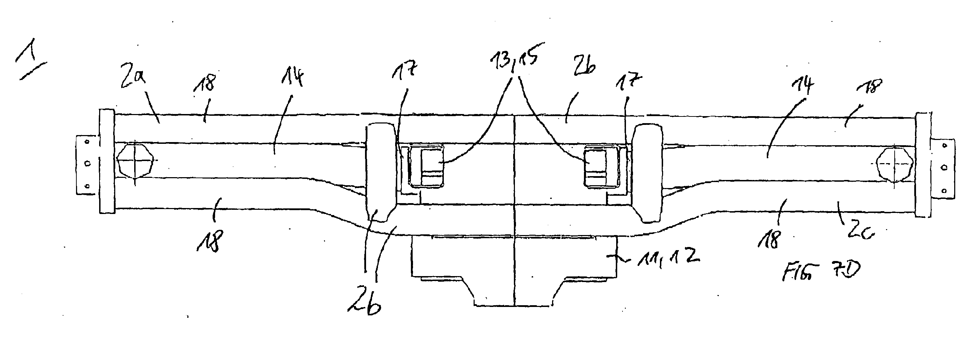

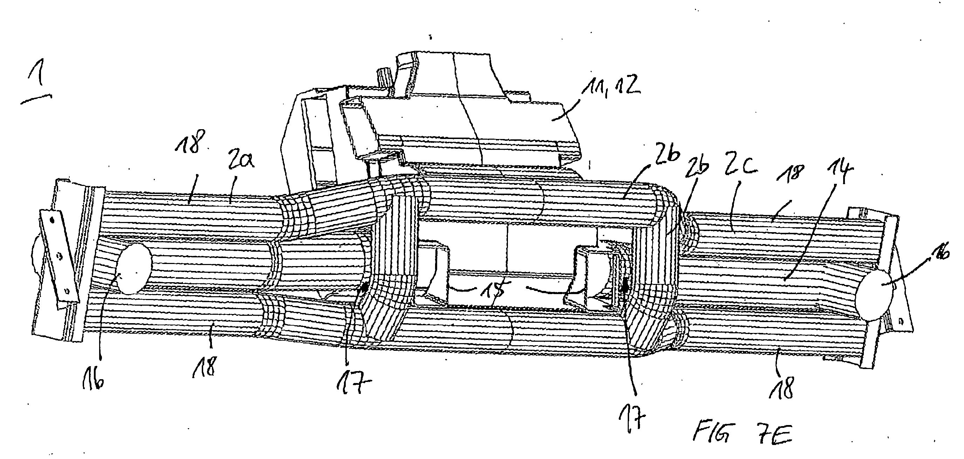

Die Figuren 7A bis 7E zeigen eine weitere alternative Ausführungsform für den Querträger 1. Dabei sind der Grundkörper 2 und dessen Teilstränge 2a bis 2c aus zwei parallel zueinander angeordneten Kanälen 18 gebildet. Die Kanäle 18 werden auch als Ober- und Unterzug bezeichnet. Zwischen den Kanälen 18 ist im Bereich der Seitenarme, d.h. im Bereich der Teilstränge 2a, 2c, des Grundkörpers 2 der Luftführungskanal 14 angeordnet. Wie in den Figuren 7D und 7E dargestellt, ist der Luftführungskanal 14 im Teilstrang 2a und 2c über das Adapterelement 17 mit dem Luftabgang 15 der Heizungs- und/oder Klimaanlage 12 verbunden.

### Bezugszeichenliste

- 1: Querträger in Hybridbauweise
- 2: Grundkörper
- 2a bis 2d: Teilstränge des Grundkörpers
- 4: aufgeweiteter Bereich des Grundkörpers
- 6: Teilstränge
- 7: Anbindungen
- 8: Verstärkung
- 9: Rippen
- 10: Wabenstruktur
- 11: Gehäuse der Heizungs- und/oder Klimaanlage
- 12: Heizungs- und/oder Klimaanlage
- 13: Strömungskanal der Heizungs- und/oder Klimaanlage
- 14: Luftführungskanal des Grundkörpers
- 15: Luftabgang der Heizungs- und/oder Klimaanlage
- 16: Auslässe
- 17: Adapterelement
- 18: Kanäle

## Patentansprüche

1. Querträger (1) in Hybridbauweise mit einer Heizungs- und/oder Klimaanlage (12) für ein Fahrzeug, umfassend einen Grundkörper (2), der mit einer Verstärkung (8) versehen ist, in welchem wenigstens ein Luftführungskanal (14) angeordnet ist und der zumindest teilweise aufgeweitet und als Teil eines Gehäuses (11) der Heizungs- und/oder Klimaanlage (12) gestaltet ist, wobei der Luftführungskanal (14) des Grundkörpers (2) mit einem Luftabgang (15) der Heizungs- und/oder Klimaanlage (12) verbunden ist **dadurch gekennzeichnet, dass** der Grundkörper im mittleren Bereich (4) in zwei Teilstränge (6) geteilt ist, die, als um die Heizungs-und/oder Klimaanlage umlaufend ausgebildet sind.

2. Querträger nach Anspruch 1, **dadurch gekennzeichnet, dass** der Grundkörper (2) mindestens zwei Teilstränge (2a, 2c) umfasst, die über einen eine Aufweitung bildenden dritten Teilstrang (2b) verbunden sind.

3. Querträger nach Anspruch 2, **dadurch gekennzeichnet, dass** die Heizungs- und/oder Klimaanlage (12) im Bereich des dritten Teilstranges (2b) an dessen Außenseite angeordnet ist, wobei die zwei Teilstränge (2a, 2c) seitlich der Heizungs- und/oder Klimaanlage (12) in Form von Seitenarmen ausgerichtet sind.

4. Querträger nach Anspruch 3, **dadurch gekennzeichnet, dass** der Luftabgang (15) in den Luftführungskanal (14) eines der einen Seitenarm bildenden Teilstränge (2a, 2c) mündet.

5. Querträger nach einem der Ansprüche 1 bis 4, **dadurch gekennzeichnet, dass** der Luftabgang (15) in den im aufgeweiteten Bereich (4) des Grundkörpers (2) angeordneten Luftführungskanal (14) mündet und/oder diesen durchläuft.

6. Querträger nach einem der Ansprüche 1 bis 5, **dadurch gekennzeichnet, dass** der Grundkörper (2) zumindest teilweise aus zwei parallel zueinander angeordneten Kanälen (18) gebildet ist.

7. Querträger nach Anspruch 6, **dadurch gekennzeichnet, dass** der Luftführungskanal (14) zumindest teilweise zwischen den parallel zueinander angeordneten Kanälen (18) geführt ist.

8. Querträger nach einem der Ansprüche 1 bis 7, **dadurch gekennzeichnet, dass** der Luftführungskanal (14) in den Grundkörper (2) eingeformt ist.

9. Querträger nach einem der Ansprüche 1 bis 8, **dadurch gekennzeichnet, dass** der Luftführungskanal (14) durch ein separates Formteil gebildet ist.

10. Querträger nach einem der Ansprüche 1 bis 9, **dadurch gekennzeichnet, dass** ein Adapterelement (17) zur Verbindung des Luftführungskanals (14) mit dem Luftabgang (15) vorgesehen ist.

11. Querträger nach Anspruch 10, **dadurch gekennzeichnet, dass** das Adapterelement (17) aus Kunststoff gebildet ist.

12. Querträger nach Anspruch 10 oder 11, **dadurch gekennzeichnet, dass** das Adapterelement (17) an die Klimaanlage (12) und/oder an den Luftführungskanal (14) integriert ist.

## Claims

1. Cross-member (1) of hybrid structure with a heating and/or air-conditioning system for a vehicle, comprising a basic body (2) which is provided with a reinforcement (8) and in which at least one air duct (14) is arranged, and which is at least partially widened and is designed as part of a housing (11) of the heating and/or air-conditioning system (12), such that the air duct (14) of the basic body (2) is connected to an air outlet (15) of the heating and/or air-conditioning system (12), **characterised in that** in its middle area the basic body is divided into two subsections (6) which encircle the heating and/or air-conditioning system.

2. Cross-member according to Claim 1, **characterised in that** the basic body (2) comprises at least two subsections (2a, 2c) connected together by a third subsection forming a widened area.

3. Cross-member according to Claim 2, **characterised in that** the heating and/or air-conditioning system (12) is arranged in the region of the third subsection (2b) on the outside thereof, the two subsections (2a, 2c) being orientated at the sides of the heating and/or air-conditioning system (12) in the form of side arms.

4. Cross-member according to Claim 3, **characterised in that** the air outlet (15) opens into the air duct (14) of one of the subsections (2a, 2c) forming a side arm.

5. Cross-member according to any of Claims 1 to 4, **characterised in that** the air outlet (15) opens into the air duct (14), which is arranged in the widened region (4) of the basic body (2), and/or runs through the said duct.

6. Cross-member according to any of Claims 1 to 5, **characterised in that** the basic body (2) is at least partially formed from two ducts (18) arranged parallel to one another.

7. Cross-member according to Claim 6, **characterised in that** the air duct (14) passes at least partially between the ducts (18) arranged parallel to one another.

8. Cross-member according to any of Claims 1 to 7, **characterised in that** the air duct (14) is formed in the basic body (2).

9. Cross-member according to any of Claims 1 to 8, **characterised in that** the air duct (14) is formed as a separate moulded part.

10. Cross-member according to any of Claims 1 to 9, **characterised in that** an adaptor element (17) is provided for connecting the air duct (14) to the air outlet (15).

11. Cross-member according to Claim 10, **characterised in that** the adaptor element (17) is made of plastic.

12. Cross-member according to either of Claims 10 or 11, **characterised in that** the adaptor element (17) is integrated onto the air-conditioning system (12) and/or onto the air duct (14).

## Revendications

1. Traverse (1) de construction hybride équipée d'un système de chauffage et / ou de climatisation (12) pour un véhicule, comprenant un corps de base (2) qui est doté d'un renfort (8), corps de base dans lequel est disposé au moins un conduit de guidage d'air (14) et qui est conformé en étant au moins partiellement élargi et réalisé comme pièce d'un carter (11) du système de chauffage et / ou de climatisation (12), où le conduit de guidage d'air (14) du corps de base (2) est raccordé à une sortie d'air (15) du système de chauffage et / ou de climatisation (12),
**caractérisée en ce que** le corps de base est divisé, dans la zone centrale (4), en deux tronçons partiels (6) qui sont configurés comme entourant le système de chauffage et / ou de climatisation.

2. Traverse selon la revendication 1, **caractérisée en ce que** le corpus de base (2) comprend au moins deux tronçons partiels (2a, 2c) qui sont reliés par un troisième tronçon partiel (2b) formant un élargissement.

3. Traverse selon la revendication 2, **caractérisée en ce que** le système de chauffage et / ou de climatisation (12) est disposé, dans la zone du troisième tronçon partiel (2b), sur son côté extérieur, où les deux tronçons partiels (2a, 2c), latéralement par rapport au système de chauffage et / ou de climatisation (12), sont disposés sous la forme de bras latéraux.

4. Traverse selon la revendication 3, **caractérisée en ce que** la sortie d'air (15) débouche dans le conduit de guidage d'air (14) de l'un des tronçons partiels (2a, 2c) formant un bras latéral.

5. Traverse selon l'une quelconque des revendications 1 à 4, **caractérisée en ce que** la sortie d'air (15) débouche dans le conduit de guidage d'air (14) disposé dans la zone élargie (4) du corps de base (2) et / ou traverse ledit conduit de guidage d'air.

6. Traverse selon l'une quelconque des revendications 1 à 5, **caractérisée en ce que** le corps de base (2) est formé au moins partiellement par deux conduits (18) disposés de façon parallèle l'un par rapport à l'autre.

7. Traverse selon la revendication 6, **caractérisée en ce que** le conduit de guidage d'air (14) est guidé au moins partiellement entre les conduits (18) disposés de façon parallèle l'un par rapport à l'autre.

8. Traverse selon l'une quelconque des revendications 1 à 7, **caractérisée en ce que** le conduit de guidage d'air (14) est formé dans le corps de base (2).

9. Traverse selon l'une quelconque des revendications 1 à 8, **caractérisée en ce que** le conduit de guidage d'air (14) est formé par une pièce moulée distincte.

10. Traverse selon l'une quelconque des revendications 1 à 9, **caractérisée en ce qu'**il est prévu un élément d'adaptateur (17) servant à relier le conduit de guidage d'air (14), à la sortie d'air (15).

11. Traverse selon la revendication 10, **caractérisée en ce que** l'élément d'adaptateur (17) est formé en matière plastique.

12. Traverse selon la revendication 10 ou 11, **caractérisée en ce que** l'élément d'adaptateur (17) est intégré au système de climatisation (12) et / ou au conduit de guidage d'air (14).
